(19) Europäisches Patentamt / European Patent Office / Office européen des brevets

(11) **EP 3 715 227 B1**

(12) **FASCICULE DE BREVET EUROPEEN**

(45) Date de publication et mention de la délivrance du brevet:
**07.06.2023 Bulletin 2023/23**

(21) Numéro de dépôt: **20165294.8**

(22) Date de dépôt: **24.03.2020**

(51) Classification Internationale des Brevets (IPC):
**B62D 59/04** *(2006.01)*  **B62D 53/06** *(2006.01)*
**B62D 61/12** *(2006.01)*  **B60D 1/66** *(2006.01)*

(52) Classification Coopérative des Brevets (CPC):
**B62D 53/068; B62D 59/04; B62D 61/12**

(54) **REMORQUE ET ENSEMBLE ROULANT COMPORTANT UNE TELLE REMORQUE**

ANHÄNGER UND ROLLENDE BAUGRUPPE, DIE EINEN SOLCHEN ANHÄNGER UMFASST

TRAILER AND WHEELED ASSEMBLY COMPRISING SUCH A TRAILER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.03.2019 FR 1903071**

(43) Date de publication de la demande:
**30.09.2020 Bulletin 2020/40**

(73) Titulaires:
• **Arquus**
**78000 Versailles (FR)**
• **Abmi Sud-Est**
**78280 Guyancourt (FR)**

(72) Inventeurs:
• **DELOUMEAU, François**
**75015 PARIS (FR)**
• **BALCONI, Franck**
**69370 Fontaines sur Saône (FR)**

(74) Mandataire: **Lavoix**
**62, rue de Bonnel**
**69448 Lyon Cedex 03 (FR)**

(56) Documents cités:
**EP-A1- 0 869 049      DE-A1- 10 224 939
FR-A1- 2 980 438      US-A- 4 877 293
US-A- 5 137 296       US-A1- 2007 017 715
US-A1- 2018 364 738**

**Description**

La présente invention concerne une remorque, ainsi qu'un ensemble roulant comportant une telle remorque.

US2007017715A1 décrit une remorque dont un bogie peut être déplacé, sur commande d'un opérateur depuis la cabine du tracteur, ou sur la base d'informations émanant d'un système électronique anti-roulis, ECBS ou ABS.

FR2980438A1 décrit un dispositif propulseur destiné à équiper une semi-remorque en vue de la rendre automotrice et permettre sa manutention indépendamment d'un tracteur.

Dans le cadre de missions effectuées par les engins militaires, c'est-à-dire des véhicules utilisés dans l'armée, la quantité de matériel embarqué à bord est un critère déterminant dans le choix du type d'engin. Certaines interventions, notamment dans les zones désertiques, imposent aux équipes de s'engager dans la durée. Il en résulte qu'on doit embarquer une quantité conséquente de matériel.

Les engins dont on parle concernent tous véhicules militaires de combat, tactiques, voire logistiques destinés à transporter du personnel, du fret, des systèmes de communications, d'armes, d'observations, ces véhicules étant conduits, télé-opérés ou intégrés dans un convoi autonome, ou totalement autonomes.

Bien que la composition du matériel à embarquer varie très fortement en fonction des missions à accomplir, l'engin doit, dans tous les cas, être capable d'embarquer la quantité maximale de matériel. Le matériel nécessaire à assurer l'autonomie d'un engin en mission pour une longue durée nécessite des capacités d'emport conséquentes. Bien que ces missions ne représentent que 20% des cas d'emplois, les engins sont jusqu'à présent dimensionnés pour embarquer la totalité de ce matériel.

Il en résulte un surdimensionnement des engins qui impacte fortement leur mobilité, leur coût de possession et leur empreinte logistique. Dans le cadre d'interventions, ce surdimensionnement peut entrainer des répercussions graves sur la réussite de la mission et sur la sécurité des équipages.

De plus, cette contrainte d'emport est antinomique avec la recherche d'engins de plus en plus compacts, manoeuvrables et furtifs. Tel est notamment le cas pour des engins prévus pour une application militaire sur un théâtre d'opérations qui peut être situé dans des zones désertiques, difficiles d'accès ou dont l'accompagnement logistique est réduit à son strict minimum.

Ainsi, il est de pratique courante d'atteler une remorque à l'engin. La remorque est destinée à être chargée de tout le matériel nécessaire pour assurer l'autonomie de l'engin lors de ses missions.

La remorque permet d'augmenter la capacité de chargement de l'ensemble roulant, sans dégrader les performances de l'ensemble en termes de mobilité ou de maniabilité. En effet, un engin tractant une remorque est sensiblement plus maniable qu'un engin seul avec une capacité de chargement équivalente, c'est-à-dire qu'un engin de plus gros volume. En ce sens, la remorque peut être qualifiée « d'engin d'allègement au contact ».

Avantageusement, certaines remorques sont capables de se déplacer de façon autonome, par exemple pour rejoindre une base militaire à des fins de ravitaillement. La remorque peut être pilotée à distance, sans chauffeur à bord donc, pour suivre une trajectoire entre un point de départ et un point d'arrivée.

Pour respecter la réglementation, l'engin d'allègement au contact doit satisfaire les conditions suivantes: En mode tracté, la charge maximum appliquée sur le système d'attelage au tracteur ne doit pas excéder 200kg. En mode autonome, en revanche, il convient de répartir au mieux le poids du chargement sur les essieux, notamment pour alléger au maximum le poids s'appliquant sur l'essieu le cas échéant. Cela permet notamment d'avoir une décélération suffisante au freinage, avec un taux de freinage supérieur à 45% et un équilibre satisfaisant lors des franchissements, par exemple lorsque la pente dépasse 30%.

L'invention propose donc une nouvelle remorque qui, tout en autorisant un mode de déplacement tracté, comprend un mode de déplacement autonome optimisé.

L'invention a pour objet une remorque selon la revendication 1.

Grâce à l'invention, la remorque permet d'optimiser le mode de déplacement autonome, en répartissant au mieux le poids de la charge sur le ou les essieux, par déplacement relatif longitudinal de l'essieu de charge et de la charge. La répartition du poids de la charge étant optimisée pour le mode de déplacement autonome, il n'en n'est pas moins que la remorque peut être utilisée en mode de déplacement tracté, notamment puisque la répartition de la charge peut être réglée de façon que le poids appliqué sur l'engin tracteur n'excède pas une valeur de seuil, par exemple 200 kg. En particulier, lorsque la remorque est en mode de déplacement tracté, l'essieu de charge est dans une position longitudinale telle, par rapport à la charge, que le poids du chargement est réparti davantage sur l'arrière de la remorque, c'est-à-dire à l'écart de l'engin tracteur, afin d'alléger le poids appliqué sur l'engin tracteur. En revanche, en mode de déplacement autonome, c'est-à-dire lorsque la remorque se déplace sans être tractée par l'engin, l'essieu de charge est dans une position longitudinale telle, par rapport à la charge, que le poids du chargement est mieux réparti sur les essieux de la remorque, ce qui améliore la maniabilité de la remorque, ainsi que ses capacités de franchissement.

Selon des aspects avantageux, mais non obligatoires de l'invention, la remorque peut comprendre une ou plusieurs des caractéristiques suivantes, prises dans toute combinaison techniquement admissible :

- Pour que l'essieu de charge et la charge soient mobiles l'un par rapport à l'autre selon la direction longitudinale, l'essieu de charge est mobile par rapport au châssis selon la direction longitudinale.
- La remorque comprend : un chariot porte-essieu, qui est solidaire de l'essieu de charge et qui est mobile en translation selon la direction longitudinale ; et au moins un rail de guidage, de préférence deux rails de guidage, s'étendant entre deux bâtis fixés au châssis, le chariot porte-essieu étant mobile en translation selon la direction longitudinale le long de chaque rail de guidage.
- La remorque comprend un bras porte-essieu, par l'intermédiaire duquel l'essieu de charge supporte le châssis, le bras porte-essieu étant mobile en rotation par rapport au châssis, autour d'un axe transversal de la remorque, pour mouvoir l'essieu de charge de l'une des positions longitudinales à l'autre.
- Pour que l'essieu de charge et la charge soient mobiles l'un par rapport à l'autre selon la direction longitudinale, la charge est mobile par rapport au châssis selon la direction longitudinale.
- Le châssis comprend un système d'attelage, pour atteler la remorque à un engin tracteur lorsque la remorque est en mode de déplacement tracté, ledit au moins un essieu comprenant, outre l'essieu de charge, un essieu relevable disposé entre l'essieu de charge et le système d'attelage selon la direction longitudinale.
- L'essieu relevable est mobile par rapport au châssis entre une position relevée et une position baissée, la remorque étant prévue pour que l'essieu relevable soit en position relevée en mode de déplacement tracté, et en position baissée en mode de déplacement autonome.
- La remorque comprend une tringlerie, qui assujettit mécaniquement la position de l'essieu de charge par rapport au chargement avec la position de l'essieu relevable par rapport au châssis, de sorte que : lorsque l'essieu de charge est déplacé jusqu'à la position longitudinale correspondant au mode de conduite tracté, l'essieu relevable est mécaniquement déplacé jusqu'à la position relevée par l'intermédiaire de la tringlerie ; et lorsque l'essieu de charge est déplacé jusqu'à la position longitudinale correspondant au mode de conduite autonome, l'essieu relevable est mécaniquement déplacé jusqu'à la position baissée par l'intermédiaire de la tringlerie.
- En mode de déplacement tracté, l'essieu de charge est l'essieu arrière de la remorque, et en mode de déplacement autonome, l'essieu de charge est l'essieu avant de la remorque.
- La remorque comprend en outre un actionneur linéaire, tel qu'un moteur ou un vérin, configuré pour déplacer l'essieu de charge et la charge l'un par rapport à l'autre, de l'une des positions longitudinales à l'autre.
- L'essieu de charge comprend un frein de stationnement.

L'invention a également pour objet un ensemble roulant, comprenant une remorque selon ce qui précède et un engin tracteur, de préférence un engin militaire, auquel la remorque est attelée lorsque la remorque est en mode de déplacement tracté et duquel la remorque est dételée lorsque la remorque est en mode de déplacement autonome.

L'invention et d'autres avantages de celle-ci apparaitront plus clairement à la lumière de la description qui va suivre de modes de réalisation conformes à l'invention, donnée uniquement à titre d'exemple et faite en référence aux dessins ci-dessous dans lesquels :

[Fig 1] La Figure 1 est une vue schématique de côté d'une remorque selon un premier mode de réalisation conforme à l'invention, dans un mode de déplacement autonome ;

[Fig 2] La Figure 2 est une vue comparable à celle de la figure 1, dans laquelle la remorque est dans un mode de déplacement tracté ;

[Fig 3] La Figure 3 est une vue schématique du système permettant de déplacer un essieu de la remorque pour passer du mode tracté au mode autonome, et inversement ;

[Fig 4] La figure 4 est une vue schématique de côté d'une remorque selon un deuxième mode de réalisation conforme à l'invention, dans un mode déplacement autonome ;

[Fig 5] La figure 5 est une vue comparable à la figure 4, dans laquelle la remorque est dans un mode de déplacement tracté ;

[Fig 6] La figure 6 est une vue schématique de côté d'une remorque selon un troisième mode de réalisation conforme à l'invention, dans un mode déplacement autonome ; et

[Fig 7] La figure 7 est une vue comparable à la figure 6, dans laquelle la remorque est dans un mode de déplacement tracté.

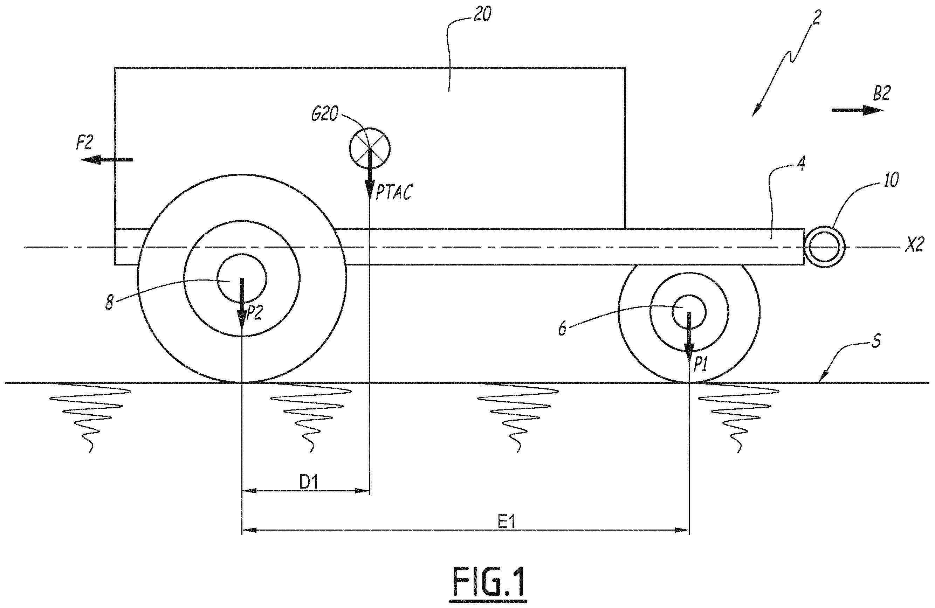

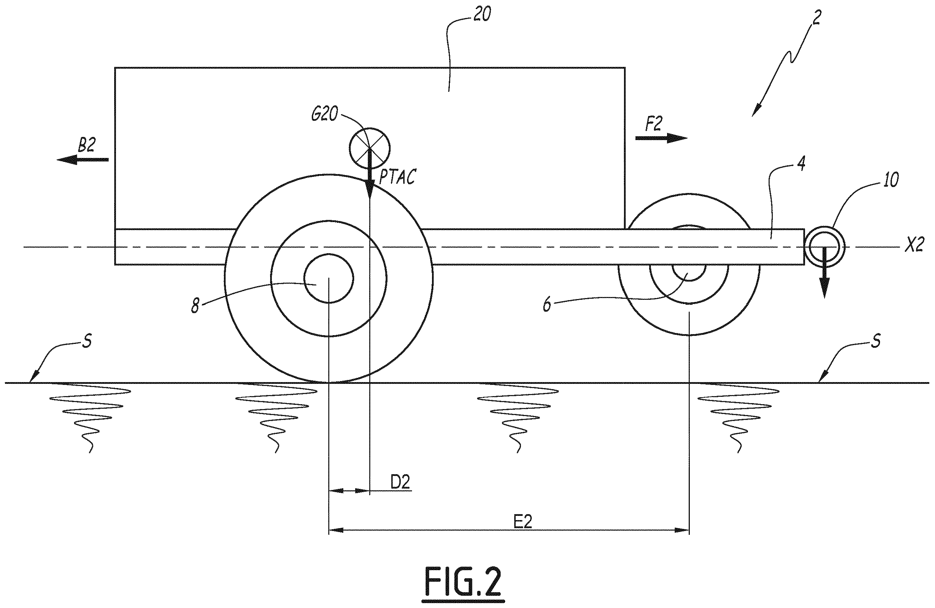

Les figures 1 et 2 représentent une remorque 2, comprenant un châssis 4, ainsi que deux essieux 6 et 8 répartis selon une direction longitudinale X2 de la remorque 2 et supportant le châssis 4. La remorque 2 comprend également une charge 20, supportée par le châssis 4. La charge 20 comprend un support, par exemple une benne ou un plateau. La charge 20 comprend également avantageusement un chargement transporté par la remorque 2, supporté et attaché au support.

Dans le cas de la figure 1, la remorque 2 repose sur la surface du sol S par l'intermédiaire des deux essieux 6 et 8. Dans le cas de la figure 2, la remorque 2 repose sur la surface du sol seulement par l'intermédiaire de l'essieu 8.

La direction longitudinale X2 définit avantageusement la plus grande dimension de la remorque 2, à savoir sa longueur. La direction longitudinale X2 est avantageusement parallèle à la surface du sol S, pour une utilisation normale de la remorque 2.

La remorque 2 est configurée pour basculer entre d'une part un mode de déplacement autonome montré sur la figure 1, c'est-à-dire un mode de déplacement où la remorque est automobile indépendamment de tout véhicule tracteur, et d'autre part un mode de déplacement tracté montré sur la figure 2, où un véhicule tracteur assure le déplacement de la remorque 2 par traction de ladite remorque 2 à l'aide d'un attelage.

De préférence, la remorque 2 est prévue pour un usage militaire, et l'engin tracteur est un engin militaire. Dans l'exemple, il s'agit d'un engin militaire, comme un véhicule blindé de combat d'infanterie, couramment appelé VBCI, un véhicule de l'avant blindé, couramment appelé VAB, ou un véhicule de type « Jaguar » ou « Griffon ».

Pour assurer le mode de déplacement autonome montré sur la figure 1, la remorque 2 comprend des moyens lui permettant de se déplacer de manière autonome sur la surface du sol S. Dans ce mode de déplacement autonome, la remorque 2 est avantageusement un véhicule autonome capable de suivre une trajectoire de rapprochement sans l'intervention d'un conducteur, c'est-à-dire sans chauffeur à bord, entre un point de départ et un point d'arrivée. D'ailleurs, la remorque 2 ne comprend de préférence aucun des équipements de commande d'un véhicule standard, comme le volant, les pédales d'accélération et de frein, etc.

Lesdits moyens permettant à la remorque 2 de se déplacer de manière autonome sur la surface du sol S comprennent au moins un moteur, thermique ou électrique, pour entrainer en rotation les roues d'au moins l'un des essieux 6 et 8 de la remorque 2, de préférence l'essieu 8, ainsi qu'un système de direction pour orienter les roues d'au moins l'un des essieux 6 et 8, de préférence l'essieu 6, dans la direction choisie. L'essieu moteur peut être le même que l'essieu directeur, ou ces deux fonctions peuvent être assurées par deux essieux différents. De préférence, lesdits moyens comprennent également un frein.

Avantageusement, lesdits moyens comprennent un ensemble de capteurs numériques, incluant par exemple une ou plusieurs caméras, un radar, un sonar ou encore un lidar, dont les données sont traitées par une unité électronique de commande embarquée sur la remorque 2. Dès lors, cette unité électronique intègre un logiciel capable de reconstituer l'environnement autour de la remorque 2 en trois dimensions, c'est-à-dire la situation routière par reconnaissance de formes (délimitation de la voie ou de la piste, présence d'un obstacle ou d'un véhicule sur la voie, etc.) et emploie des algorithmes d'intelligence artificielle pour décider de l'action à réaliser sur les organes moteur et directionnel du véhicule. En d'autres termes, en mode de déplacement autonome, la remorque 2 est conduite automatiquement par l'unité électronique de commande embarquée, de préférence sans intervention humaine dans cette conduite, ou pour le moins avec une intervention humaine cantonnée à une supervision de la conduite automatique effectuée par l'unité électronique.

Pour assurer le mode de déplacement attelé, le châssis 4 comprend avantageusement un système d'attelage 10 avec l'engin tracteur, incluant par exemple un timon. Sur la figure 2, l'engin tracteur sur lequel est attelée la remorque 2 n'est pas représenté. Le système d'attelage 10 est préférentiellement un système automatique grâce auquel la remorque 2 peut être attelée et dételée de l'engin tracteur sans intervention humaine extérieure. Dans le cas où la remorque 2 est prévue pour un usage militaire, ceci est particulièrement pratique sur un champ de bataille car le personnel militaire n'est pas sollicité pour cette opération et n'est donc pas exposé aux dangers environnants le cas échéant. Par exemple, le système d'attelage automatique comprend une pièce mâle et une pièce femelle.

De préférence, en mode de déplacement autonome, un sens de marche avant F2 de la remorque 2 est dirigé parallèlement à la direction longitudinale X2, dans le sens allant de l'essieu 6 à l'essieu 8, c'est-à-dire vers l'arrière de la remorque 2. Un sens de marche arrière B2 est orienté à l'opposé du sens de marche avant F2, c'est-à-dire dans le sens allant de l'essieu 8 à l'essieu 6, c'est-à-dire vers l'avant de la remorque 2. Le sens de marche avant F2 correspond au sens de déplacement normal de la remorque 2, notamment sur route, par opposition au sens de marche arrière B2, vers lequel la remorque 2 se déplace essentiellement pour les manoeuvres. En mode de déplacement autonome, l'essieu 6 est donc l'essieu arrière alors que l'essieu 8 est l'essieu avant.

De préférence, en mode de déplacement tracté, le sens de marche avant F2 de la remorque 2 est dirigé dans le sens allant de l'essieu 8 à l'essieu 6, c'est-à-dire vers l'avant de la remorque et vers l'engin tracteur tractant la remorque 2 via le système d'attelage 10. Le sens de marche arrière B2 est orienté à l'opposé du sens de marche avant F2, c'est-à-dire dans le sens allant de l'essieu 6 à l'essieu 8. En mode de déplacement tracté, l'essieu 6 est donc l'essieu avant alors que l'essieu 8 est l'essieu arrière. Il y a donc préférentiellement une inversion du sens de marche entre le mode de déplacement autonome et le mode de déplacement tracté.

En variante, il n'y a pas d'inversion du sens de marche entre le mode de déplacement autonome et le mode de déplacement tracté, le sens de marche avant F2 restant par exemple toujours orienté de l'essieu 8 vers l'essieu 6.

Avantageusement, au moins un essieu de la remorque 2 est relevable. Dans l'exemple, l'essieu relevable est l'essieu 6. Parmi les essieux de la remorque 2, l'essieu relevable 6 est avantageusement l'essieu le plus proche du système d'attelage 10, selon la direction X2. L'essieu relevable 6 est donc entre le système d'attelage 10 et l'essieu 8, selon la direction X2. La remorque 2 est prévue pour que l'essieu relevable 6 soit en position relevée en mode de déplacement tracté, c'est-à-dire dans la configuration de la figure 2, et en position baissée en mode de déplacement autonome, c'est-à-dire dans la configuration de la figure 1. En position baissée, l'essieu 6 peut reposer sur le sol S. En position relevée, l'essieu 6 est à distance et au-dessus du sol S, et ne supporte donc plus la remorque 2. L'essieu relevable 6 peut être qualifié de « roue folle ».

Au contraire, l'essieu 8 est conçu pour être en contact avec le sol S et ainsi supporter la remorque 2 en mode de déplacement autonome et en mode de déplacement tracté. L'essieu 8 est ainsi qualifié de « essieu de charge ».

De préférence, la remorque 2 comprend un actionneur, tel qu'un vérin, pour lever ou abaisser l'essieu relevable 6 automatiquement.

Dans le mode de réalisation des figures 1 à 3, la ou les roues de l'essieu 6, ont un diamètre inférieur à celui des roues de l'essieu 8. De préférence, le diamètre est environ 1,5 fois inférieur.

Au moins un essieu de la remorque 2, en particulier l'essieu 8, est mobile par rapport au châssis 4 selon une direction longitudinale X2 de la remorque, de façon que l'essieu 8 puisse prendre deux positions longitudinales le long du châssis 4, selon que la remorque 2 est tractée par un engin ou qu'elle se déplace de façon autonome. Ces deux positions sont représentées sur les figures 1 et 2, respectivement. Cette mobilité longitudinale de l'essieu 8 par rapport au châssis 4 implique que l'essieu 8 est mobile par rapport à la charge 20 portée par le châssis 4, qui, dans le cas des figures 1 et 2, est préférentiellement fixe par rapport au châssis 4 selon la direction X2.

En mode de déplacement autonome, l'essieu 8 est dans une position longitudinale éloignée de l'essieu 6, et du système d'attelage 10. En mode de déplacement tracté, l'essieu 8 est dans une position longitudinale rapprochée de l'essieu 6 et du système d'attelage 10.

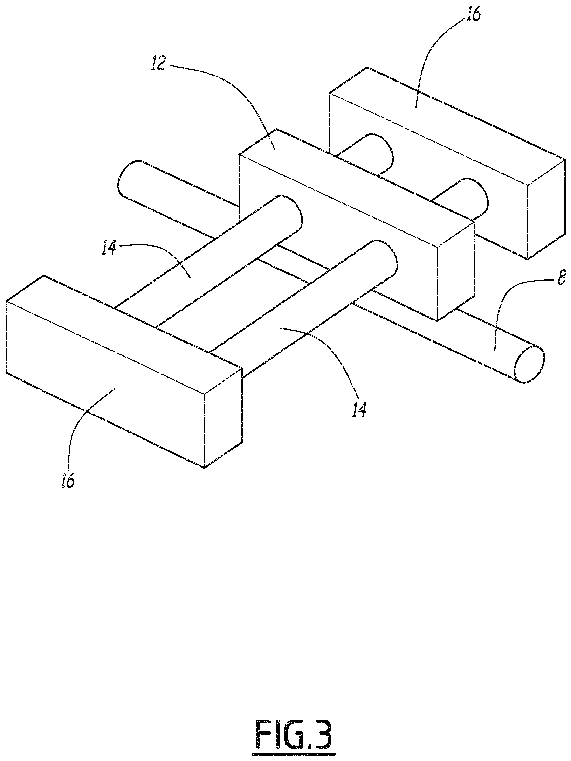

Dans l'exemple, et comme visible à la figure 3, la remorque 2 comprend un système de guidage pour guider l'essieu 8 dans son déplacement lors du changement de position le long du châssis 4. Ce système de guidage comprend ici un chariot porte-essieu 12, qui est solidaire de l'essieu 8. Le chariot 12 est mobile en translation parallèle à la direction X2, par rapport au châssis 4. La translation du chariot 12 est guidée par deux rails de guidage 14, sinon au moins un rail de guidage 14, appartenant au système de guidage. Chaque rail de guidage 14 s'étend longitudinalement entre deux bâtis 16 du système de guidage, les deux bâtis 16 étant fixés au châssis 4 de la remorque 2. Les bâtis 16 solidarisent fixement les rails 14 au châssis 4. Les deux rails 14 sont parallèles à la direction longitudinale X2 définie précédemment.

En particulier, le chariot porte-essieu 12 définit deux ouvertures à l'intérieur desquelles sont engagés les deux rails de guidage 14.

On pourrait toutefois imaginer une construction différente permettant d'assurer un déplacement en translation longitudinale de l'essieu 8 par rapport au châssis 4.

De préférence, la remorque 2 comprend en outre des moyens de verrouillage (non représentés) du chariot 12 en position longitudinale, afin de bloquer la position du chariot 12 le long de la direction X2 par rapport au châssis 4, soit dans la position correspondant au mode autonome, soit dans la position correspondant au mode tracté. Ces moyens de verrouillage peuvent par exemple prendre la forme d'une butée escamotable qui vient bloquer le chariot porte-essieu 12 contre l'un des deux bâtis 16.

Plus généralement, que la mobilité de l'essieu 8 soit assurée à l'aide du chariot 12 ou d'un autre moyen, on prévoit avantageusement des moyens de verrouillage, qui opèrent un verrouillage de l'essieu 8 lorsque l'essieu 8 est dans l'une des deux positions longitudinales, et qui libèrent l'essieu 8, pour que l'essieu 8 puisse passer d'une position longitudinale à l'autre.

Selon un mode de réalisation préférentiel, la remorque comprend en outre un actionneur linéaire (non représenté), tel qu'un moteur ou un vérin, pour déplacer automatiquement le chariot 12 en translation. Ainsi, l'actionneur linéaire opère un déplacement de l'essieu 8 et de la charge 20 l'un par rapport à l'autre selon la direction X2. Par exemple, l'actionneur linéaire est fixé sur l'un des deux bâtis 16.

Alternativement, le chariot porte-essieu 12 est déplacé grâce à la force de traction de l'engin tracteur. Plus généralement, on prévoit avantageusement que l'essieu de charge 8 est déplacé d'une position longitudinale à l'autre grâce à un effort longitudinal, par exemple une force de traction, appliqué par l'engin tracteur. Pour cela, on prévoit que la remorque 2 est équipée d'un frein de stationnement opérant un blocage des roues de l'essieu 8, de préférence sans blocage des roues de l'essieu 6. Lorsque l'on souhaite passer du mode de déplacement autonome au mode de déplacement tracté, ou vice-versa, on peut déplacer l'essieu 8 par rapport au châssis 4 en appliquant un effort longitudinal sur le châssis 4, en particulier sur le système d'attelage 10, typiquement grâce à l'engin tracteur, tout en maintenant les roues de l'essieu 8 bloquées grâce au frein de stationnement. Précisément, l'essieu 8 est immobilisé par rapport au sol S, du fait des efforts d'adhérence entre les roues bloquées de l'essieu 8 et la surface du sol S. En revanche, l'essieu 8 reste mobile par rapport au châssis 4 selon la direction X2, de sorte que le châssis 4 et la charge 20 sont déplacés par rapport à l'essieu 8 sous l'effet de la force de traction.

Pour que l'essieu 8 soit déplacé entre les deux positions longitudinales sous l'action de l'engin tracteur, on prévoit que les moyens de verrouillage de l'essieu 8 sont déverrouillés. Une fois la position longitudinale souhaitée atteinte par l'essieu 8, on verrouille cette position grâce aux moyens de verrouillage de l'essieu 8.

Par exemple, pour faire passer l'essieu 8 de la position du mode de déplacement autonome à la position du mode de déplacement tracté, on déplace l'engin tracteur, durant l'opération d'attelage ou alors qu'il est déjà attelé, en direction de la remorque 2, c'est-à-dire en marche arrière de l'engin tracteur, pour appliquer un effort longitudinal (aussi dirigé vers l'arrière) sur le système d'attelage 10, ce qui permet de déplacer le chariot porte-essieu 12 vers l'avant par rapport au châssis 4. On passe ainsi de la configuration de la figure 1 à celle de la figure 2.

Selon un mode de réalisation, la remorque comprend une tringlerie, c'est-à-dire un mécanisme, qui assujettit les positions longitudinales de l'essieu de charge 8 aux positions de relevage de l'essieu relevable 6. En d'autre termes, le déplacement de l'essieu de charge 8 entre ses deux positions longitudinales entraine, par l'intermédiaire de la tringlerie, un déplacement de l'essieu relevable 6 entre la position relevée et la position baissée.

Lorsque l'essieu de charge 8 est déplacé jusqu'à la position longitudinale correspondant au mode de conduite tracté de la remorque, l'essieu relevable 6 est mécaniquement déplacé jusqu'à la position relevée, le déplacement de l'essieu 8 actionnant le déplacement de l'essieu 6 via la tringlerie ou, optionnellement, vice-versa. Lorsque l'essieu de charge 8 est déplacé jusqu'à la position longitudinale correspondant au mode de conduite autonome de la remorque, l'essieu relevable 6 est mécaniquement déplacé jusqu'à la position baissée, le déplacement de l'essieu 8 actionnant le déplacement de l'essieu 6 via la tringlerie, ou, optionnellement, vice versa. Dans ce mode de réalisation, un seul actionneur peut donc actionner à la fois les essieux 6 et 8 dans leur déplacement respectif. Alternativement, lorsque l'essieu de charge 8 est déplacé sous l'action d'un effort de traction de l'engin tracteur comme décrit ci-avant, l'effort de traction de l'engin tracteur entraîne automatiquement, à la fois le déplacement de l'essieu 8 d'une position longitudinale à l'autre et le déplacement de l'essieu 6 en relevage et en abaissement. Le déplacement des deux essieux 6 et 8 ne nécessite dès lors pas obligatoirement d'actionneur embarqué sur la remorque.

Pour la compréhension, on suppose que le chargement 20 pèse un certain poids, auquel s'ajoute au poids du reste de la remorque 2, formant ce qu'on appelle le poids total en Charge (ou PTAC). En mode de déplacement autonome, ce poids PTAC est réparti sur les deux essieux 6 et 8 de la remorque 2, en fonction de l'emplacement du centre de gravité G20 du chargement. En mode de déplacement tracté, lorsque l'essieu 6 est relevé, ce poids PTAC est réparti entre l'essieu 8 et le système d'attelage 10, transmettant une partie du poids à l'engin tracteur.

Dans le cas de la figure 1 où la remorque se déplace de manière autonome sur la surface du sol, l'objectif est que le poids total en charge soit bien réparti entre l'avant et l'arrière de la remorque 2, de façon à ce qu'il n'y ait pas de risque de bascule et que la remorque 2 reste bien maniable. Ceci est d'autant plus important lorsque le terrain est accidenté.

Dans cette configuration, le poids statique appliqué sur l'essieu sur l'essieu 6, s'exprime par l'équation suivante :

[Math 1]

$$P1 = \frac{PTAC}{E1} * D1$$

Et le poids statique appliqué sur l'essieu 8 est défini par l'équation suivante :

[Math 2]

$$P2 = \frac{PTAC}{E1} * (E1 - D1)$$

Dans le cas de la figure 2 où la remorque 2 est tractée, l'objectif est d'alléger au maximum le poids appliqué sur le système d'attelage 10. Or, le poids statique appliqué sur le système d'attelage 10 est défini par l'équation suivante :

[Math 3]

$$P3 = \frac{PTAC}{E2} * D2$$

L'idée est donc d'avancer longitudinalement l'essieu mobile 8 pour réduire au maximum la distance D2 mesurée longitudinalement entre le centre de l'essieu et le centre de gravité G20 du chargement 20.

La course de déplacement de l'essieu 8 est calculée de façon à ce que le poids appliqué sur le système d'attelage 10 n'excède pas 200 kg, même lorsqu'on a atteint le poids maximal autorisé.

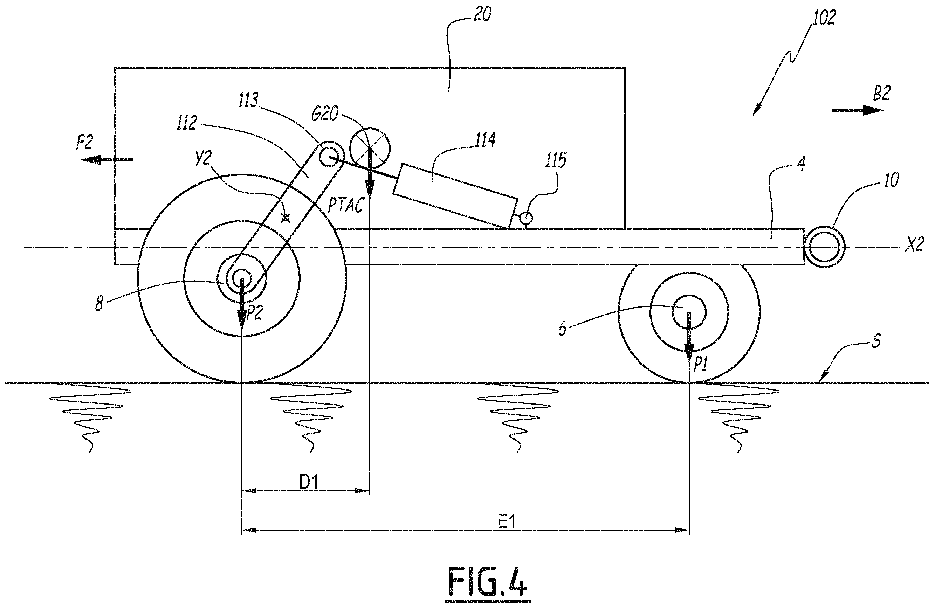

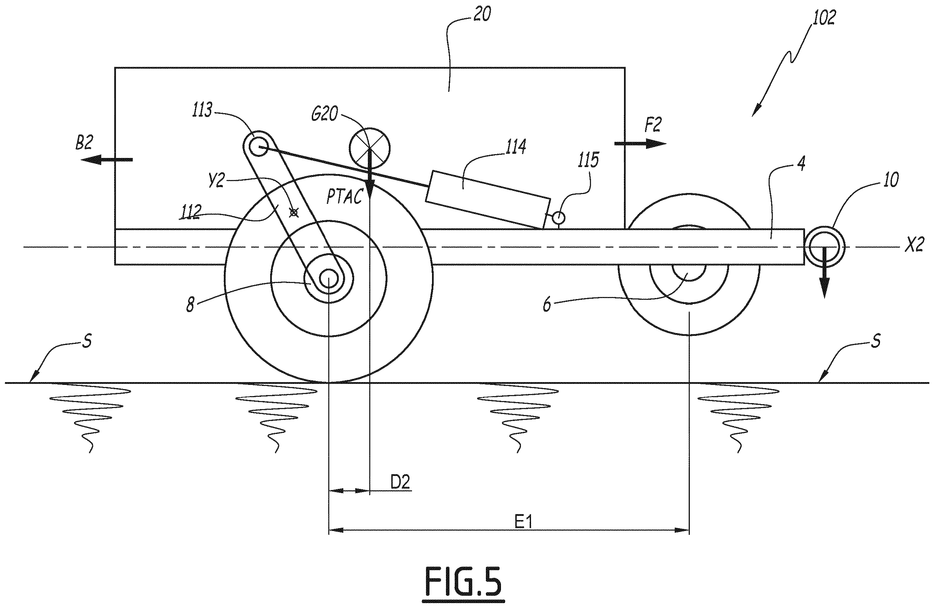

Les figures 4 et 5 montrent un autre mode de réalisation d'une remorque 102, en tous points identique à la remorque du mode de réalisation des figures 1 à 3, hormis en ce qui concerne les différences mentionnées ci-dessous. Les références identiques sur les figures désignent des caractéristiques identiques.

Sur la figure 4, la remorque 102 est montrée en mode de déplacement autonome, et, sur la figure 5, la remorque 102 est montrée en mode de déplacement tracté.

Pour la remorque 102, à la place du chariot 12 et des rails de guidage 14 prévus pour la remorque 2, on prévoit que la remorque 102 comprend un bras porte-essieu 112, par l'intermédiaire duquel l'essieu mobile 8 supporte le châssis 4.

Pour être mobile par rapport au châssis 4, l'essieu de charge 8 est monté à une extrémité inférieure du bras 112. Le bras porte-essieu 112 est monté sur le châssis 4, par exemple via une liaison pivotante non-illustrée. Ainsi, le bras 112 est mobile en rotation par rapport au châssis 4, autour d'un axe transversal Y2 de la remorque 102, traversant le bras 112 à une position intermédiaire sur le bras 112, par exemple au milieu du bras 112. L'axe transversal Y2 est avantageusement perpendiculaire à la direction X2. L'axe transversal Y2 s'étend avantageusement dans le sens de la largeur de la remorque, selon une orientation horizontale lorsque la remorque 102 repose sur un sol S horizontal.

Une mise en rotation du bras 112 autour de l'axe Y2 par rapport au châssis 4, et donc par rapport à la charge 20, entraîne un déplacement circulaire, autour de l'axe Y2, de l'essieu 8. Une composante de ce déplacement circulaire de l'essieu correspond à un déplacement de l'essieu 8 selon la direction longitudinale X2. Ainsi, la rotation du bras 112 autour de l'axe Y2 permet de mouvoir l'essieu mobile 8 de la position longitudinale de la figure 4 à la position longitudinale de la figure 5 et vice-versa. Ces deux positions longitudinales sont réparties sur un axe parallèle à la direction X2. Le pivotement du bras 112 déplace donc l'essieu 8 entre la position longitudinale correspondant au mode de déplacement autonome et la position longitudinale, distincte, correspondant au mode de déplacement tracté.

De préférence, une extrémité supérieure 113 du bras 112, opposée à l'essieu 8, est attachée à un actionneur linéaire 114 de la remorque 102, tel qu'un moteur ou un vérin, par l'intermédiaire d'une liaison autorisant un pivotement du bras 112 par rapport à l'actionneur linéaire 114 autour d'un axe parallèle à l'axe Y2. Au niveau du bras 112, l'axe Y2 est disposé entre l'extrémité 113 et l'essieu 8. A une autre extrémité 115 de l'actionneur 114, laquelle est opposée au bras 112, l'actionneur linéaire 114 est avantageusement lié au châssis 4 par l'intermédiaire d'une autre liaison autorisant un pivotement de l'actionneur linéaire 114 par rapport au châssis 4 autour d'un axe parallèle à l'axe Y2.

Un actionnement de l'actionneur linéaire 114, ici, en compression ou extension entre ses deux extrémités, entraînent une mise en rotation du bras 112 par rapport au châssis 4 autour de l'axe Y2, ce qui déplace l'essieu 8 d'une position longitudinale à l'autre.

L'actionneur linéaire 114 comprend avantageusement un moyen de suspension d'un ensemble, comprenant le châssis 4 et la charge 20, par rapport à un ensemble comprenant le bras 112 et l'essieu 8. Pour cela, par exemple, l'actionneur linéaire 114 est lié au châssis 4 par l'intermédiaire d'un organe viscoélastique et/ou est lié au bras 112 par l'intermédiaire d'un organe viscoélastique, l'organe viscoélastique formant le moyen de suspension.

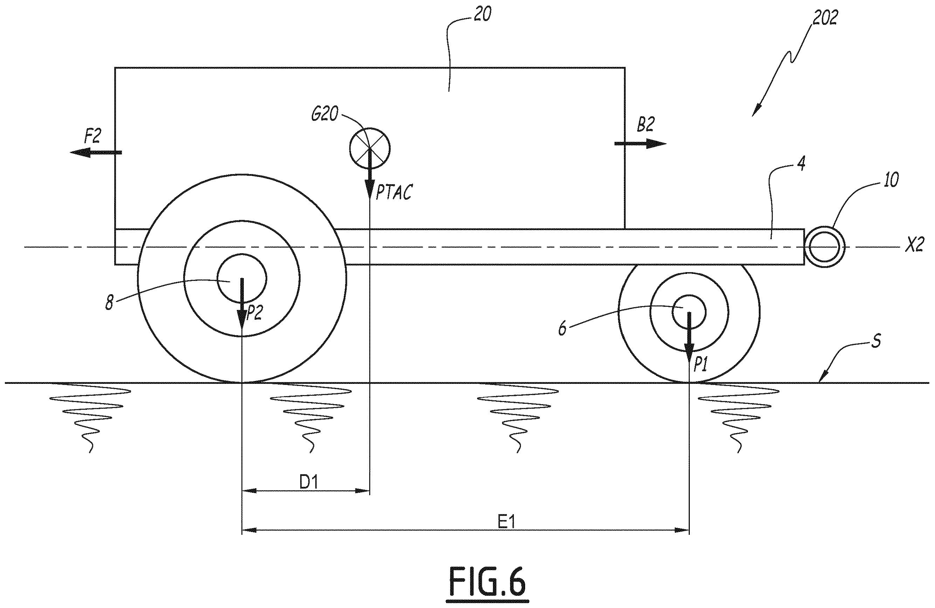

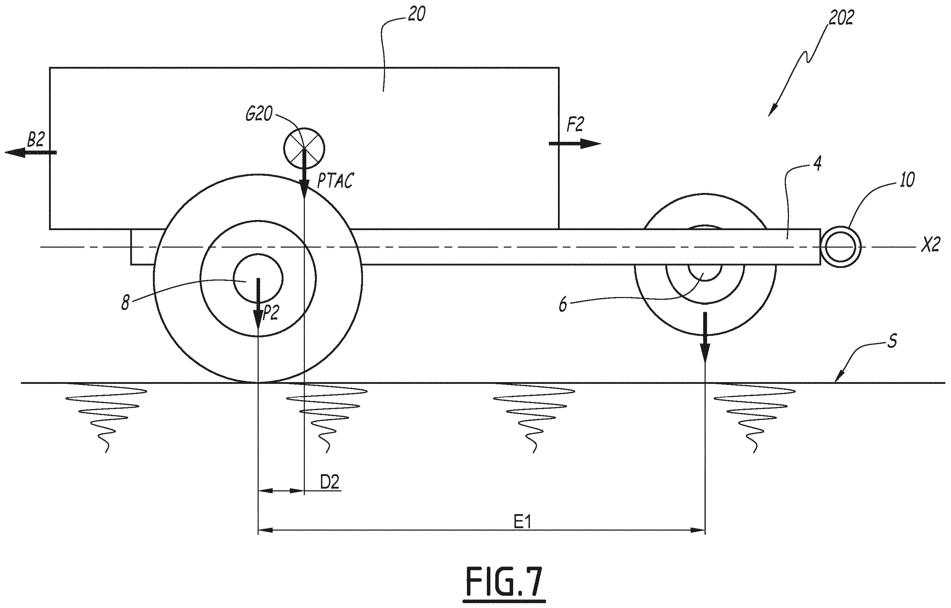

Les figures 6 et 7 montrent un autre mode de réalisation d'une remorque 202, en tous points identique à la remorque 2 du mode de réalisation des figures 1 à 3, ou en tous points identique à la remorque 102 du mode de réalisation des figures 4 et 5, hormis en ce qui concerne les différences mentionnées ci-dessous. Les références identiques sur les figures désignent des caractéristiques identiques.

Sur la figure 6, la remorque 202 est montrée en mode de déplacement autonome, et, sur la figure 7, la remorque 202 est montrée en mode de déplacement tracté.

Pour la remorque 202, on prévoit que la charge 20 est mobile par rapport au châssis 4 selon la direction X2. Ainsi, comme montré sur les figures 6 et 7, la charge peut être déplacée entre une position avancée et une position reculée. Se déplaçant par rapport au châssis 4, la charge 20 est déplacée par rapport aux essieux 6 et 8 selon la direction X2. C'est donc en déplaçant la charge 20 que la charge 20 et l'essieu de charge 8 sont mobiles l'un par rapport à l'autre selon la direction X2, et que la répartition du poids entre les essieux 6 et 8 et le système 10 peut être modifiée. De préférence, le déplacement de la charge 20 est opéré par un actionneur linéaire, non représenté, lié à la charge 20 et au châssis 4. L'actionneur linéaire forme avantageusement un vérin ou un moteur.

Avantageusement, dans ce mode de réalisation des figures 6 et 7, l'essieu de charge 8 n'est pas nécessairement mobile par rapport au châssis 4, mais peut au contraire être fixe par rapport au châssis selon la direction longitudinale X2.

Selon une variante non représentée, la remorque 2 peut naturellement comprendre un nombre d'essieux supérieur à deux.

Toute caractéristique d'un mode de réalisation et de ses variantes décrite ci-dessus peut être mise en oeuvre pour les autres modes de réalisation et variantes décrits ci-dessus, pour autant que techniquement possible, et toujours dans l'étendue des revendications annexées.

## Revendications

**1.** Remorque (2; 102; 202), comprenant :

- au moins un essieu (6, 8), par l'intermédiaire duquel la remorque (2; 102; 202) est configurée pour reposer sur le sol (S) ;
- un châssis (4), supporté par ledit au moins un essieu (6, 8) ; et

- une charge (20), supportée par le châssis (4) ;

ledit au moins un essieu (6, 8) comprenant un essieu de charge (8), l'essieu de charge (8) et la charge (20) étant mobiles l'un par rapport à l'autre selon une direction longitudinale (X2) de la remorque (2; 102; 202), **caractérisée en ce que** la remorque (2; 102; 202) :

- est configurée pour évoluer entre un mode de déplacement autonome et un mode de déplacement tracté ;
- comprend des moyens, permettant à la remorque (2 ; 102 ; 202), lorsqu'elle est en mode de déplacement autonome, de se déplacer de manière autonome sur la surface du sol (S) ; et
- est configurée de façon que l'essieu de charge (8) et la charge (20) prennent, l'un par rapport à l'autre selon la direction longitudinale (X2), deux positions longitudinales (Figure 1, Figure 2) distinctes, selon que la remorque (2; 102; 202) est en mode de déplacement autonome ou en mode de déplacement tracté.

2. Remorque (2 ; 102) selon la revendication 1, **caractérisée en ce que**, pour que l'essieu de charge (8) et la charge (20) soient mobiles l'un par rapport à l'autre selon la direction longitudinale (X2), l'essieu de charge (8) est mobile par rapport au châssis (4) selon la direction longitudinale (X2).

3. Remorque (2) selon la revendication 2, **caractérisée en ce que** la remorque (2) comprend :

- un chariot porte-essieu (12), qui est solidaire de l'essieu de charge (8) et qui est mobile en translation selon la direction longitudinale (X2) ; et
- au moins un rail de guidage (14), de préférence deux rails de guidage (14), s'étendant entre deux bâtis (16) fixés au châssis (4), le chariot porte-essieu (12) étant mobile en translation selon la direction longitudinale (X2) le long de chaque rail de guidage (14).

4. Remorque (102) selon l'une quelconque des revendications 2 ou 3, **caractérisée en ce que** la remorque (102) comprend un bras porte-essieu (112), par l'intermédiaire duquel l'essieu de charge (8) supporte le châssis (4), le bras porte-essieu (112) étant mobile en rotation par rapport au châssis (4), autour d'un axe transversal (Y2) de la remorque (102), pour mouvoir l'essieu de charge (8) de l'une des positions longitudinales à l'autre.

5. Remorque (202) selon l'une quelconque des revendications précédentes, **caractérisée en ce que**, pour que l'essieu de charge (8) et la charge (20) soient mobiles l'un par rapport à l'autre selon la direction longitudinale (X2), la charge (20) est mobile par rapport au châssis (4) selon la direction longitudinale (X2).

6. Remorque (2; 102; 202) selon l'une des revendications précédentes, **caractérisée en ce que** le châssis (4) comprend un système d'attelage (10), pour atteler la remorque (2; 102; 202) à un engin tracteur lorsque la remorque est en mode de déplacement tracté, ledit au moins un essieu (6, 8) comprenant, outre l'essieu de charge (8), un essieu relevable (6) disposé entre l'essieu de charge (8) et le système d'attelage (10) selon la direction longitudinale (X2).

7. Remorque (2 ; 102 ; 202) selon la revendication 6, **caractérisé en ce que** l'essieu relevable (6) est mobile par rapport au châssis (4) entre une position relevée et une position baissée, la remorque étant prévue pour que l'essieu relevable (6) soit en position relevée en mode de déplacement tracté, et en position baissée en mode de déplacement autonome.

8. Remorque (2 ; 102 ; 202) selon la revendication 7, **caractérisé en ce que** la remorque comprend une tringlerie, qui assujettit mécaniquement la position de l'essieu de charge (8) par rapport au chargement (20) avec la position de l'essieu relevable (6) par rapport au châssis (4), de sorte que :

- lorsque l'essieu de charge (8) est déplacé jusqu'à la position longitudinale correspondant au mode de conduite tracté, l'essieu relevable (6) est mécaniquement déplacé jusqu'à la position relevée par l'intermédiaire de la tringlerie, et
- lorsque l'essieu de charge (8) est déplacé jusqu'à la position longitudinale correspondant au mode de conduite autonome, l'essieu relevable (6) est mécaniquement déplacé jusqu'à la position baissée par l'intermédiaire de la tringlerie.

9. Remorque (2; 102; 202) selon l'une quelconque des revendications précédentes, **caractérisée en ce que** :

- en mode de déplacement tracté, l'essieu de charge (8) est l'essieu arrière de la remorque (2; 102; 202), et
- en mode de déplacement autonome, l'essieu de charge (8) est l'essieu avant de la remorque (2; 102; 202).

10. Remorque (2; 102; 202) selon l'une quelconque des revendications précédentes, **caractérisée en ce que** la remorque (2; 102; 202) comprend en outre un actionneur linéaire, tel qu'un moteur ou un vérin, configuré pour déplacer l'essieu de charge (8) et la charge (20) l'un par rapport à l'autre, de l'une des positions longitudinales à l'autre.

11. Remorque (2; 102; 202) selon l'une des revendications précédentes, **caractérisée en ce que** l'essieu de charge (8) comprend un frein de stationnement.

12. Ensemble roulant, comprenant une remorque (2; 102; 202) selon l'une quelconque des revendications précédentes et un engin tracteur, de préférence un engin militaire, auquel la remorque (2; 102; 202) est attelée lorsque la remorque est en mode de déplacement tracté et duquel la remorque est dételée lorsque la remorque est en mode de déplacement autonome.

**Patentansprüche**

1. Anhänger (2; 102; 202), umfassend:

   - mindestens eine Achse (6, 8), mit deren Hilfe der Anhänger (2; 102; 202) konfiguriert ist, um auf dem Boden (S) zu ruhen;
   - einen Rahmen (4), der von der mindestens eine Achse (6, 8) getragen wird; und
   - eine Last (20), die vom Rahmen (4) getragen wird;
   wobei die mindestens eine Achse (6, 8) eine Lastachse (8) umfasst, wobei die Lastachse (8) und die Last (20) in Bezug aufeinander gemäß einer Längsrichtung (X2) des Anhängers (2; 102; 202) beweglich sind, **dadurch gekennzeichnet, dass** der Anhänger (2; 102; 202):

   - konfiguriert ist, um zwischen einer autonomen Fortbewegungsart und einer geschleppten Fortbewegungsart zu wechseln;
   - Mittel umfasst, die es dem Anhänger (2; 102; 202) ermöglichen, wenn er sich in der autonomen Fortbewegungsart befindet, sich auf autonome Weise auf der Fläche des Bodens (S) fortzubewegen; und
   - derart konfiguriert ist, dass die Lastachse (8) und die Last (20) in Bezug aufeinander gemäß der Längsrichtung (X2) zwei verschiedene längs gerichtete Positionen (Fig. 1, Fig. 2) einnehmen, e nachdem, ob sich der Anhänger (2; 102; 202) in der autonomen Fortbewegungsart oder in der geschleppten Fortbewegungsart befindet.

2. Anhänger (2; 102) nach Anspruch 1, **dadurch gekennzeichnet, dass**, damit die Lastachse (8) und die Last (20) in Bezug aufeinander gemäß der Längsrichtung (X2) beweglich sind, die Lastachse (8) mit Bezug auf den Rahmen (4) gemäß der Längsrichtung (X2) beweglich ist.

3. Anhänger (2) nach Anspruch 2, **dadurch gekennzeichnet, dass** der Anhänger (2) Folgendes umfasst:

   - einen Achsträgerwagen (12), der mit der Lastachse (8) fest verbunden ist, und der in Translation gemäß der Längsrichtung (X2) beweglich ist; und
   - mindestens eine Führungsschiene (14), vorzugsweise zwei Führungsschienen (14), die sich zwischen zwei am Rahmen (4) befestigten Gestellen (16) erstrecken, wobei der Achsträgerwagen (12) in Translation gemäß der Längsrichtung (X2) entlang jeder Führungsschiene (14) beweglich ist.

4. Anhänger (102) nach einem der Ansprüche 2 oder 3, **dadurch gekennzeichnet, dass** der Anhänger (102) einen Achsträgerarm (112) umfasst, mit dessen Hilfe die Lastachse (8) den Rahmen (4) trägt, wobei der Achsträgerarm (112) in Rotation mit Bezug auf den Rahmen (4) um eine Querachse (Y2) des Anhängers (102) beweglich ist, um die Lastachse (8) von einer der Längspositionen in die andere zu bewegen.

5. Anhänger (202) nach einem der vorhergehenden Ansprüche, **dadurch gekennzeichnet, dass**, damit die Lastachse (8) und die Last (20) in Bezug aufeinander gemäß der Längsrichtung (X2) beweglich sind, die Last (20) mit Bezug auf den Rahmen (4) gemäß der Längsrichtung (X2) beweglich ist.

6. Anhänger (2; 102; 202) nach einem der vorhergehenden Ansprüche, **dadurch gekennzeichnet, dass** der Rahmen (4) ein Kupplungssystem (10) umfasst, um den Anhänger (2; 102; 202) an eine Zugmaschine zu kuppeln, wenn sich der Anhänger in der geschleppten Fortbewegungsart befindet, wobei die mindestens eine Achse (6, 8) außer der Lastachse (8) eine Liftachse (6) umfasst, die zwischen der Lastachse (8) und dem Kupplungssystem (10) gemäß der Längsrichtung (X2) angeordnet ist.

7. Anhänger (2; 102; 202) nach Anspruch 6, **dadurch gekennzeichnet, dass** die Liftachse (6) mit Bezug auf den Rahmen (4) zwischen einer angehobenen Position und einer abgesenkten Position beweglich ist, wobei vorgesehen ist, dass sich die Liftachse (6) des Anhängers in der angehobenen Position in der geschleppten Fortbewegungsart und in der abgesenkten Position in der autonomen Fortbewegungsart befindet.

8. Anhänger (2; 102; 202) nach Anspruch 7, **dadurch gekennzeichnet, dass** der Anhänger ein Gestänge umfasst, das mechanisch die Position der Lastachse (8) mit Bezug auf die Ladung (20) mit der Position der Liftachse (6) mit Bezug auf den Rahmen (4) befestigt, so dass:

   - wenn die Lastachse (8) bis in die Längsposition bewegt wird, die dem geschleppten Fahrmodus entspricht, die Liftachse (6) mechanisch mit Hilfe des Gestänges bis in die angehobene Position bewegt wird, und
   - wenn die Lastachse (8) bis in die Längsposition bewegt wird, die dem autonomen Fahrmodus entspricht, die Liftachse (6) mechanisch mit Hilfe des Gestänges bis in die abgesenkte Position bewegt wird.

9. Anhänger (2; 102; 202) nach einem der vorhergehenden Ansprüche, **dadurch gekennzeichnet, dass**

   - in der geschleppten Fortbewegungsart die Lastachse (8) die hintere Achse des Anhängers (2; 102; 202) ist, und
   - in der autonomen Fortbewegungsart die Lastachse (8) die vordere Achse des Anhängers (2; 102; 202) ist.

10. Anhänger (2; 102; 202) nach einem der vorhergehenden Ansprüche, **dadurch gekennzeichnet, dass** der Anhänger (2; 102; 202) außerdem eine lineare Betätigungsvorrichtung umfasst, wie z. B. einen Motor oder einen Zylinder, der konfiguriert ist, um die Lastachse (8) und die Last (20) mit Bezug aufeinander von einer der Längspositionen in die andere zu bewegen.

11. Anhänger (2; 102; 202) nach einem der vorhergehenden Ansprüche, **dadurch gekennzeichnet, dass** die Lastachse (8) eine Feststellbremse umfasst.

12. Rollende Baugruppe, umfassend einen Anhänger (2; 102; 202) nach einem der vorhergehenden Ansprüche und eine Zugmaschine, vorzugsweise ein militärisches Gerät, an das der Anhänger (2; 102; 202) gekuppelt wird, wenn sich der Anhänger in der geschleppten Fortbewegungsart befindet, und von dem der Anhänger abgekuppelt wird, wenn sich der Anhänger in der autonomen Fortbewegungsart befindet.

**Claims**

1. A trailer (2; 102; 202), comprising:

   - at least one axle (6, 8), by means of which the trailer (2; 102; 202) is configured to rest on the ground (S);
   - a chassis (4), supported by said at least one axle (6, 8); and
   - a load (20), supported by the chassis (4);
   said at least one axle (6, 8) comprising a load axle (8), the load axle (8) and the load (20) being movable relative to one another along a longitudinal direction (X2) of the trailer (2; 102; 202),
   **characterized in that** the trailer (2; 102; 202):

   - is configured to switch between an autonomous movement mode and a towed movement mode;
   - comprises means allowing the trailer (2; 102; 202), when it is in the autonomous movement mode, to move autonomously over the surface of the ground (S); and
   - is configured such that the load axle (8) and the load (20) assume, relative to one another along the longitudinal direction (X2), two distinct longitudinal positions (Fig. 1, Fig. 2), depending on whether the trailer (2; 102; 202) is in the autonomous movement mode or in the towed movement mode.

2. The trailer (2; 102) according to claim 1, **characterized in that**, in order for the load axle (8) and the load (20) to be movable relative to one another along the longitudinal direction (X2), the load axle (8) is movable relative to the chassis (4) along the longitudinal direction (X2).

3. The trailer (2) according to claim 2, **characterized in that** the trailer (2) comprises:

> - an axle-carrying carriage (12), which is secured to the load axle (8) and which is translatable along the longitudinal direction (X2); and
> - at least one guide rail (14), preferably two guide rails (14), extending between two frames (16) fixed to the chassis (4), the axle-carrying carriage (12) being translatable along the longitudinal direction (X2) along each guide rail (14).

4. The trailer (102) according to any one of claims 2 or 3, **characterized in that** the trailer (102) comprises an axle-carrying arm (112), by means of which the load axle (8) supports the chassis (4), the axle-carrying arm (112) being rotatable relative to the chassis (4), about a transverse axis (Y2) of the trailer (102), in order to move the load axle (8) from one of the longitudinal positions to the other.

5. The trailer (202) according to any one of the preceding claims, **characterized in that**, in order for the load axle (8) and the load (20) to be movable relative to one another along the longitudinal direction (X2), the load (20) is movable relative to the chassis (4) along the longitudinal direction (X2).

6. The trailer (2; 102; 202) according to one of the preceding claims, **characterized in that** the chassis (4) comprises a coupling system (10) for coupling the trailer (2; 102; 202) to a towing vehicle when the trailer is in the towed movement mode, said at least one axle (6, 8) comprising, aside from the load axle (8), a lift axle (6) arranged between the load axle (8) and the coupling system (10) along the longitudinal direction (X2).

7. The trailer (2; 102; 202) according to claim 6, **characterized in that** the lift axle (6) is movable relative to the chassis (4) between a raised position and a lowered position, the trailer being provided so that the lift axle (6) is in the raised position in the towed movement mode, and in the lowered position in the autonomous movement mode.

8. The trailer (2; 102; 202) according to claim 7, **characterized in that** the trailer comprises a rod linkage, which mechanically subjugates the position of the load axle (8) relative to the load (20) with the position of the lift axle (6) relative to the chassis (4), such that:

> - when the load axle (8) is moved to the longitudinal position corresponding to the towed driving mode, the lift axle (6) is mechanically moved to the raised position by means of the rod linkage, and
> - when the load axle (8) is moved to the longitudinal position corresponding to the autonomous driving mode, the lift axle (6) is mechanically moved to the lowered position by means of the rod linkage.

9. The trailer (2; 102; 202) according to any one of the preceding claims, **characterized in that**:

> - in the towed movement mode, the load axle (8) is the rear axle of the trailer (2; 102; 202), and
> - in the autonomous movement mode, the load axle (8) is the front axle of the trailer (2; 102; 202).

10. The trailer (2; 102; 202) according to any one of the preceding claims, **characterized in that** the trailer (2; 102; 202) further comprises a linear actuator, such as a motor or a jack, configured to move the load axle (8) and the load (20) relative to one another, from one of the longitudinal positions to the other.

11. The trailer (2; 102; 202) according to one of the preceding claims, **characterized in that** the load axle (8) comprises a parking brake.

12. A rolling assembly, comprising a trailer (2; 102; 202) according to any one of the preceding claims and a towing vehicle, preferably a military vehicle, to which the trailer (2; 102; 202) is coupled when the trailer is in the towed movement mode and from which the trailer is uncoupled when the trailer is in the autonomous movement mode.

FIG.1

EP 3 715 227 B1

**FIG.2**

FIG.3

## FIG.4

EP 3 715 227 B1

**FIG.5**

EP 3 715 227 B1

## FIG.6

**FIG.7**

EP 3 715 227 B1

**EP 3 715 227 B1**

## RÉFÉRENCES CITÉES DANS LA DESCRIPTION

**Documents brevets cités dans la description**

- US 2007017715 A1
- FR 2980438 A1